Europäisches Patentamt

(19) European Patent Office

Office européen des brevets

(11) Publication number: **0 056 724**
A2

# (12) EUROPEAN PATENT APPLICATION

(21) Application number: 82300260.5

(22) Date of filing: 19.01.82

(51) Int. Cl.³: **F 17 C 11/00**
C 01 B 3/00, C 08 J 9/26

(30) Priority: 19.01.81 US 226454
19.01.81 US 226455

(43) Date of publication of application:
28.07.82 Bulletin 82/30

(84) Designated Contracting States:
BE DE FR GB IT NL SE

(71) Applicant: MPD Technology Corporation
681 Lawlins Road
Wyckoff New Jersey 07481(US)

(72) Inventor: Bernstein, Philip
16 Stonehouse Road
Glen Ridge New Jersey 07028(US)

(72) Inventor: Coffey, James Peter
137 South Street Extension
Warwick New York 10990(US)

(72) Inventor: Varker, Alan Edward
Rd 1, Overhill Lane
Warwick New York 10990(US)

(72) Inventor: Arms, John Taylor
12 Hoffman Drive
Monroe New York 10950(US)

(72) Inventor: Goodell, Paul Douglas
234 Mulberry Street
Ridgewood New Jersey 07450(US)

(72) Inventor: Clark, William Donald Kennedy
19 Park Avenue
Warwick New York 10990(US)

(74) Representative: Dixon, Sarah et al,
c/o C H Greenstreet Thames House (Fifth Floor) Millbank
London SW1P 4QF(GB)

(54) Polymeric structure for hydrogen storage.

(57) A polymeric structure comprising particles of a hydridable material encradled in a porous, fibre-containing polymeric material is disclosed. The structure is prepared by dry processing the hydridable material, a removable pore-forming material and a fibrillatable polymer to fibrillate the latter and form a homogeneous mixture. The pore-forming material is then removed.

Preferably, the fibrillatable polymer is converted to fibres in the presence of the other components of the mixture.

EP 0 056 724 A2

Croydon Printing Company Ltd

## Polymeric Structure for Hydrogen Storage

This invention relates to a polymeric structure for use in the storage of hydrogen which comprises particles of a hydridable material encradled in a porous, fibre-containing polymeric material, and, more particularly, to a method of producing such a structure.

The use of inert binding materials to position and support particles of active materials such as catalytic materials and materials which store gases is well known. The selection of a suitable binding material and type of support structure is influenced by such factors as the environment in which the active material has to function (the binder should be physically and chemically inert in this environment) and the ability of the support structure of binder to retain the active material and at the same time provide good access to the active material. In the case of hydridable materials, that is, materials which will undergo a reversible reaction with hydrogen to form a hydride and can thus be used to store hydrogen, there is an additional constraint on the support structure, namely that it must be able to accommodate the large changes in volume of the particles of hydridable material that often accompany reaction with, and release of, hydrogen.

Various inert binders have been proposed for coating particles of hydridable materials. For example, U.S. Patent No. 3,881,960 discloses hydrogen storage electrodes for galvanic cells in which the particles are coated with $TiNi_3$. $TiNi_3$ is inactive, has high hydrogen permeability and is sufficiently elastic to withstand changes in volume of the particles. However, this procedure is expensive and it is difficult to coat the particle surfaces. U.S. Patents Nos. 4,036,944 and 4,110,425 disclose hydridable materials bonded in a polymeric matrix. In the former patent, the binder is a thermoplastic elastomer having a specified block copolymer structure. Pellets containing 50% to 99% of the active hydridable material, formed from a paste, are disclosed. The paste is pelleted under pressure. In the latter patent, active material in a specified grain size range is formed by cementing or sintering hydridable material with heat resistant plastics. In this process, the active particles are mixed with the plastic in the form of a powder, suspension, emulsion, solution or melt. Only the emulsion route is exemplified.

Polymeric structures such as those described above do not allow for maximum exposure of the surface of the active material.

According to the present invention, there is provided a method of preparing a polymeric structure comprising a particulate hydridable material encradled in a porous, fibre-containing polymeric material, which method includes the steps of dry processing the hydridable material, a removable pore-forming material and a fibrillatable polymer to fibrillate the latter and form a homogeneous mixture, and removing the pore-forming material.

In the method of the invention, the fibrillation and formation of the homogeneous mixture are performed in the absence of a liquid medium i.e. by dry processing techniques.

Advantageously, the fibrillatable polymer is converted to fibrous form in the presence of the hydridable material at least, and preferably in the presence of all the components although fibrillation may, if desired, be wholly or partially effected before admixture of the components.

Many hydridable materials are known including both pure metals such as Mg, Ti, V, Nb, and Pd and binary, tertiary and more complex alloys of such metals as Ti, Co, Ni, Fe, Zr, Mg, Ca, Mn and the rare earth elements. Examples of specific materials are $LaNi_5$, $LaNi_{4.7}$ $Al_{0.3}$, $LaNi_{5-x}Al_x$, $LaCo_5$, $LaNi_3Co_2$, FeTi, $(Fe,Mn)Ti$, $Mg_2Ni$ and $Ti_2Ni$. The conditions under which different hydridable materials absorb and desorb hydrogen vary widely, and the particular material employed will therefore be chosen with respect to the intended use of the structure as of course will the other components of the structure.

Preferably, the hydridable material is used in finely divided form - for example powder which will pass a 100 mesh U.S. Standard screen (149 micron aperture) although more coarse powder (-10 mesh for example) may also be used. In general, coarse powder will disintegrate during use although the fine particles produced will to a great extent be retained by the fibres of the polymeric structure.

Since the polymeric structure is porous, it can accommodate changes in the shape and volume of the particles of hydridable material that may occur during use.

After removal of the pore-forming material, the polymeric structure should consist predominantly of hydridable material(i.e. at least 50 weight % of the structure should be hydridable material). Preferably the hydridable material will constitute from 75 to 95% of the structure.

The hydridable material may include an inert material as thermal ballast to assist in the absorption and desorption reactions which are highly exothermic and endothermic respectively. For example the hydridable material may consist of 25 parts of active $LaNi_5$ and 75 parts of Ni 123 as thermal ballast. Any statement herein relating to proportions or quantities of hydridable material refers to the sum of active hydridable material and thermal ballast if present.

To develop the porosity in the polymeric structure, the pore-forming material is removed, leaving a frame-work of interconnecting pores, after conversion of the fibrillatable polymer to fibres. Preferably, the pore-forming material is also a polymer. As such, it will be compatible with the other polymeric components of the mixture. A particular advantage of using a polymeric pore-forming material is that if, as is preferred, fibrillation is effected in the presence of the other components, it will be facilitated by the use of a polymeric pore-forming material. Indeed, the pore-forming material is preferably also a processing agent for the fibrillatable polymer. Non-polymeric materials may of course be used as pore-forming material in the method of the invention provided that they can serve as the medium in which the other components may be worked and uniformly distributed.

Preferably, the pore-forming material is removed by leaching with an appropriate liquid. Examples of suitable leachable polymeric pore formers are polyolefin oxides such as polyethylene oxide and polypropylene oxide (water soluble), polyethyleneimine (soluble in dilute aqueous acid e.g. sulphuric acid), and polyacrylic acid (soluble in dilute aqueous alkali e.g. sodium hydroxide). One example of a non-polymeric pore-forming material is paraffin wax (soluble in halcgenated organic solvents). In general, water-soluble pore-forming materials are preferred although the other materials may be used if desired provided that the leaching medium does not adversely affect the hydridable material.

It is also desirable for the pore-forming material to wet the surface of the hydridable material as it is believed that this may contribute to the accessibility of the active material to gases, liquids etc. after removal of the pore former.

Polyethylene oxide which has a melting point below 75°C, is freely soluble in water, and will serve as a processing agent in the fibrillation of fibrillatable polymers such as polytetrafluoroethylene (PTFE) and polypropylene is a particularly preferred pore-forming material in the method of the present invention. Preferably the type of polyethylene oxide used will have a molecular weight in the range from 100,000 to 1,000,000.

The amount of pore-forming material used is dependent on the degree of porosity desired in the final product. In general, the amount of pore-forming material added to the mixture will constitute at least 10% by weight of the mixture and preferably from 15 to 30%. The polymeric structure itself preferably has a porosity of 70 to 80% by volume and to achieve this an equivalent volume % of pore forming material is necessary. In the case of polyethylene oxide, this corresponds to 15 to 50 weight %.

The fibrillatable polymer should not, of course, react with any of the other components of the mixture and it should be inert in the environment in which the polymeric structure is to be used. Fluorocarbon polymers such as PTFE and fibrillatable polypropylene are particularly suitable for use as fibrillatable polymers in the method of the present invention. Suitable commercially available forms of PTFE are the powders sold by du Pont as Teflon 6A and 7A. Fibrillatable polypropylene is available for example as strands, tape and film which may be used as such or may be cut or chopped to appropriate size.

After removal of the pore-forming material, the fibrillatable polymer (now in fibrous form) may constitute from 0.5 to 5% by weight of the polymeric structure, typically from 1 to 2%.

If it is desired to provide the polymeric structure with more strength and structural integrity than would be provided by the fibrillatable polymer alone, a support polymer may be incorporated in the mixture.

The support polymer, like the fibrillatable polymer, should not react with any of the other components of the mixture and should be inert in the environment in which the polymeric structure is to be used. The material or materials used as support polymer should be selected bearing in mind that it is desirable for the fibrillatable polymer to be capable of dispersing in the support polymer. The following thermoplastic polymers either alone or in suitable combinations may be used as support polymer in the method of the present invention: polyolefins such as polyethylene, polypropylene, polybutylene, polyisobutylene or copolymers thereof with ethylacrylate and/or vinyl acetate; halogenated polyhydrocarbons and copolymers thereof; polyamides; polysulphones; polyacetates; polycarbonates; polyesters, cellulose esters; silicones. Of these materials the polyolefins are preferred since they are substantially saturated compounds and as such will be chemically inert, particularly towards the active material.

As mentioned above, the fibrillatable polymer is preferably converted to fibrous form in the presence of the other components of the mixture. Fibrillation is achieved by mechanical working in the absence of a liquid medium i.e. by a dry processing technique. Such techniques are known per se and are disclosed for the production of powder products in, for example, U.S. Patents Nos. 3,838,092 and 4,071,946. Fibrillation may be achieved in standard polymer processing equipment such as a Banbury mixer or a ball mill. After fibrillation, the mixture will consist of discrete fibres distributed throughout a homogeneous matrix of pore-forming material, hydridable material and optionally support polymer and encradling the particles of hydridable material. This material may then be shaped by a known processing technique such as extrusion, moulding, blowing or combinations thereof. If a continuous method is desired, fibrillation may be effected in the shaping apparatus for example rolling apparatus or a twin-screw extruder. With appropriate choice of processing technique, the components can be processed directly to a sheet or bar of the desired thickness. Alternatively, the mixture may be made into pellets and used as such, or the pellets may be extruded or blown or injection moulded to a film.

Preferably the homogeneous mixture will comprise (in % by weight) from 50 to 75% hydridable material, from 0.5 to 5% fibrillated polymer and from 10 to 47% pore-forming material, the balance being support polymer. After removal of the pore-forming material, the polymeric structure will preferably comprise (in % by weight) from 75 to 95% hydridable material and from 1 to 5% fibrillated polymer, the balance being support polymer.

In a system in which the fibrillatable polymer is polytetrafluoroethylene and the pore-forming material is polyethylene oxide and which also includes low density polyethylene as support polymer, the proportions of the components used would typically be in the ranges set out below (parts by weight):

| Component | Parts |
|---|---|
| Support Polymer | 5 to 10 |
| Fibrillatable Polymer | 1 to 5 |
| Pore-forming material | 40 to 60 |
| Hydridable material          e.g. LaNi$_5$ | 142 |

The proportion of polymers to hydridable material may be varied according to the processing technique used.

Mixing can be carried out as a continuous process simultaneously with fibrillation, e.g. in a two-roll mill at 65-75$^{\circ}$C, using the addition sequence: support polymer: pore-forming material; fibrillatable polymer; hydridable material. Alternatively batch compounding can be carried out in several sequences, in a mixing vessel such as a Banbury mixer or a twin-screw extruder. For example, the fibrillatable polymer and hydridable material may be treated in a mixer to convert the fibrillatable polymer to fibres and maximise dispersion of fibres in the hydridable material. This material is then removed from the mixer. The mixer is preheated to a temperature in the range from 75 to 100$^{\circ}$C and the mixing speed is maintained at .14 RPM, whilst the support polymer and pore-former are added to the mixer and mixed                    for about 5 to 10 minutes to ensure fluxing. Next the pre-blend of hydridable material and fibrillated polymer is added. Mixing is continued for a further 5 to 10 minutes. The resultant mixture is removed and pressed into thin sheets for pelletizing to 0.3 cm cube, whereafter it may be further processed as desired. Once the mixture is in its final form, the polyethylene oxide pore-former may be removed by leaching with water to produce a porous structure in which the particles of hydridable material are encradled in a complex of fibres.

The invention will now be further described with reference to the following examples. In all the examples, the hydridable material was finely divided LaNi$_5$ powder (over 50% of this powder passed a 325 mesh U.S. Standard screen). The fibrillatable polymer was Teflon 7A, an extrudable grade of PTFE produced by du Pont. The pore-forming material was Polyox WRSN -10, a commercially available form of polyethylene oxide. The support polymer was polyethylene or polypropylene.

### EXAMPLE I

9 grams polyethylene, 1 gram Teflon 7A, 40 grams WRSN-10, and 142 grams LaNi$_5$ were blended in a Banbury mixer for 17 minutes at room temperature. The resulting mixture was extruded to rod through a 19 mm Haake extruder having a screw with an L/D ratio of 20:1. The extruded rods in which the PTFE was now in fibrous form, were leached in water at about 50$^{\circ}$C to remove substantially all the polyethylene oxide thereby forming a porous structure. Examination of this structure under a microscope at 1000x magnification showed the active LaNi$_5$ particles encradled in fibres and dispersed throughout a porous fibre-containing polymeric matrix.

### EXAMPLE II

5 grams polypropylene, 0.75 grams Teflon, 30 grams WRSN-10 and 100 grams LaNi$_5$ were blended in a Banbury mixer for 17 minutes at room temperature. The resulting mixture was extruded to rod as described in Example I. The extruded rods were leached in water at about 50$^{\circ}$C to remove substantially all the polyethylene oxide. Again, a porous structure in which the active LaNi$_5$ particles were encradled in a fibrous network resulted..

### EXAMPLE III

Using a standard 30 cm ball mill of 15 cm depth having ceramic balls of average size 1.3 cm, 142 grams of LaNi$_5$ powder and 5 grams of Teflon 7A were mixed at 60 to 60 RPM for 16 hours to fibrillate the polymer in the presence of the        hydridable material.

40 grams of WRSN-10 and 9 grams of United States Industries' FN 500 (a low density polyethylene) were placed on a two-roll rubber mill which had been preheated to 75°C. The roll nip was 0.010.

The materials were mixed on the rolls for two minutes until a band formed. Then, the mixture of fibrillated Teflon 7A and $LaNi_5$ from the ball mill was slowly added to the band of polyethylene and polyethylene oxide on the rolls. The mix was periodically peeled from the mill and folded to ensure homogeneity. After five minutes of mixing in this manner, the product, a sheet of active $LaNi_5$ encradled in a fibre-containing polymeric material, was peeled off the mill.

EXAMPLE IV

A porous, fibre-containing polymeric structure with $LaNi_5$ particles encradled therein was prepared as in Example I. The absorption kinetics of this structure were determined by constant pressure absorption of hydrogen. The reaction half-time was found to be 8 minutes at 60 psi.

Claims

1.      A method of preparing a polymeric structure comprising a particulate hydridable material encradled in a porous, fibre-containing polymeric material which method includes the steps of dry processing the hydridable material, a removable pore-forming material and a fibrillatable polymer to fibrillate the latter and form a homogeneous mixture and removing the pore-forming material.

2.      A method as claimed in claim 1, wherein the mixture further includes a support polymer.

3.      A method as claimed in claim 1 or 2, wherein the fibrillatable polymer·is fibrillated in the presence of the hydridable material, the pore-forming material, and any support polymer.

4.      A method as claimed in any preceding claim, wherein the pore-forming material is a polymer.

5.      A method as claimed in claim 4 wherein the pore-forming material is a processing agent for the fibrillatable polymer.

6.      A method as claimed in any preceding claim, wherein the pore-forming material is water soluble and is removed by dissolution in an aqueous medium.

7.      A method as claimed in any preceding claim wherein· the pore-forming material constitutes from 70 to 80% by volume of the mixture.

8.      A method as claimed in any one of claims 4 to 7 wherein the pore-forming material is polyethylene oxide, polypropylene oxide or a mixture thereof.

9.      A method as claimed in any preceding claim wherein the fibrillatable polymer is polytetrafluoroethylene or polypropylene.

10.     A method as claimed in any one of claims 2 to 9, wherein the support polymer is thermoplastic.

11.　　　A method as claimed in claim 10 wherein the support polymer is polyethylene.

12.　　　A method as claimed in any preceding claim, wherein the polymeric structure is prepared in particulate form.

13.　　　A method as claimed in any one of claims 1 to 12, wherein the polymeric structure is prepared in sheet form.

14.　　　A method as claimed in any preceding claim, wherein after removal of the pore-forming material the hydridable material constitutes from 75 to 95% by weight of the polymeric structure.

15.　　　A method as claimed in any preceding claim, wherein the hydridable material is $LaNi_5$.

16.　　　A polymeric system, suitable for use in a method as claimed in any one of claims 2 to 15 which system comprises a fibrillatable polymer, a support polymer and a removable pore-forming material.

17.　　　A system as claimed in claim 16 wherein the fibrillatable polymer is polytetrafluoroethylene or polypropylene.

18.　　　A system as claimed in claim 16 or 17 wherein the support polymer is thermoplastic.

19.　　　A system as claimed in claim 18 wherein the support polymer is polyethylene.

20.　　　A system as claimed in any one of claims 1 to 19 wherein the pore-forming material is a water-soluble polymer.

21.　　　A system as claimed in claim 20 wherein the pore-forming material is polyethylene oxide, polypropylene oxide or a mixture thereof.